(19) Europäisches Patentamt / European Patent Office / Office européen des brevets

(11) **EP 3 414 649 B1**

(12) **FASCICULE DE BREVET EUROPEEN**

(45) Date de publication et mention de la délivrance du brevet:
**21.09.2022 Bulletin 2022/38**

(21) Numéro de dépôt: **17704736.2**

(22) Date de dépôt: **09.02.2017**

(51) Classification Internationale des Brevets (IPC):
**G06F 3/0481** (2022.01)    **G06F 3/0338** (2013.01)
**G05G 9/047** (2006.01)    **A63F 13/00** (2014.01)

(52) Classification Coopérative des Brevets (CPC):
**G06F 3/0481; A63F 13/00; A63F 13/21;
A63F 13/42; G06F 3/0338;** A63F 13/22

(86) Numéro de dépôt international:
**PCT/EP2017/052939**

(87) Numéro de publication internationale:
**WO 2017/137526 (17.08.2017 Gazette 2017/33)**

(54) **PROCEDE DE CONTROLE D'UNE POSITION ET/OU D'UN DEPLACEMENT D'UN CURSEUR DE VISEE**

VERFAHREN ZUR STEUERUNG EINER POSITION UND/ODER EINER BEWEGUNG EINES ZIELCURSORS

METHOD FOR CONTROLLING A POSITION AND/OR A MOVEMENT OF A TARGET CURSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2016 FR 1651117**

(43) Date de publication de la demande:
**19.12.2018 Bulletin 2018/51**

(73) Titulaire: **Bigben Interactive SA
59814 Lesquin Cedex (FR)**

(72) Inventeurs:
• **FALC, Alain
8500 Kortrijk (BE)**
• **ALLAERT, Yannick
62410 Meurchin (FR)**
• **CHATRIER, Norman
92300 Levallois Perret (FR)**
• **DUDOYER, Stephen
59810 Lesquin (FR)**

(74) Mandataire: **Vigand, Philippe et al
Novagraaf International SA
Chemin de l'Echo 3
1213 Onex - Genève (CH)**

(56) Documents cités:
**WO-A1-2007/122532    WO-A1-2015/142594
US-B1- 6 975 302**

**Description**

La présente invention concerne de manière générale un procédé de contrôle d'une position et/ou d'un déplacement d'un curseur de visée sur un écran au moyen d'un dispositif d'actionnement de jeu équipé d'au moins un élément de commande de direction, comme par exemple une manette de jeu munie d'un ou plusieurs sticks directionnels ou encore un joystick ou une manette de type manche à balai. L'invention concerne plus particulièrement un procédé de contrôle d'un curseur de visée au moyen de l'élément de commande de direction dans le but d'adapter ce type de dispositif d'actionnement de jeu, ordinairement destiné à une utilisation pour console de jeux vidéos, à une utilisation pour jeux sur ordinateur. L'invention concerne également le dispositif d'actionnement de jeu résultant.

Le document US 6,975,302 décrit un joystick isométrique ainsi que son utilisation. WO 2015/142594 A1 divulgue un procédé permettant de déplacer un curseur avec une manette de jeu.

L'adaptation d'une manette de jeu ou d'un joystick pour une utilisation sur ordinateur présente un certain nombre de difficultés dont quelques-unes sont listées ci-dessous. Par souci de simplicité, nous utiliserons principalement la dénomination liée à un joystick, mais bien entendu cela reste également applicable pour un stick de manette de jeu.

Tout d'abord, une première difficulté concerne le manque d'amplitude du joystick ou du stick. L'utilisation d'une souris n'impose pas de contrainte liée à l'amplitude du mouvement. L'utilisateur dispose théoriquement d'autant d'espace que nécessaire afin de décomposer le mouvement et d'augmenter la précision du geste. L'amplitude d'un joystick ou d'un stick est quant à elle limitée, en conséquence pour une visée précise nécessitant une sensibilité basse, la vitesse maximale de déplacement du curseur devrait être faible de sorte que la visée perd alors en réactivité. Il est alors par exemple impossible dans ces conditions d'atteindre une cible se déplaçant rapidement ou d'atteindre rapidement une cible immobile. Réciproquement une visée réactive nécessite une sensibilité élevée et entraine une perte de précision.

Une autre difficulté est liée au déplacement du levier d'un joystick ou d'un stick basé sur sa position absolue. Le signal obtenu à partir d'un joystick ou d'un stick fournit une information sur la position du levier mais ne donne aucune information sur son mouvement. Il en résulte un important manque de réactivité lors de son utilisation en tant que périphérique de pointage. Ceci est notamment le cas pour les jeux de tir impliquant une visée au moyen du joystick ou d'un stick. La visée peut être résumée au problème suivant : étant donné un curseur contrôlé par l'utilisateur et une cible (éventuellement mobile), il s'agit de déplacer le curseur sur la cible le plus rapidement et précisément possible. Ce problème est traité de façon radicalement différente par l'utilisateur selon que le périphérique utilisé soit une souris ou au contraire un joystick ou un stick. Dans le cas d'une souris le mouvement du curseur reproduit le mouvement de la souris, l'utilisateur n'a qu'à déplacer cette dernière en conséquence. Dans le cas d'un joystick l'utilisateur doit orienter le levier dans la direction correspondant à la cible, la vitesse de déplacement dépend alors de l'inclinaison du levier. Or l'inclinaison est limitée par l'amplitude de ce dernier, ce processus rend la visée moins naturelle et moins réactive. Dans le cas d'un stick, l'utilisateur doit déplacer le stick dans la direction correspondant à la cible, la vitesse de déplacement dépend alors du déplacement du stick, qui est limité par l'amplitude de ce dernier, ce processus rendant la visée moins naturelle et moins réactive

Une autre difficulté concerne le recentrage du joystick/stick par rapport à sa position centrale correspondant à l'absence de mouvement du curseur. Pour cela il est nécessaire que le levier ou le stick se recentre systématiquement lorsqu'il n'est pas manipulé dans sa position de repos. Or le mécanisme employé (généralement un ressort) ne permet pas un recentrage parfait, de sorte que la position de repos ne correspond pas à la position centrale. Ce recentrage est même souvent très approximatif (parfois plus de 15 % de l'amplitude totale). Ceci provoque un mouvement permanent du curseur et contraint l'utilisateur à devoir lui même recentrer le joystick/stick ce qui complique encore la visée, en particulier lorsqu'il faut stabiliser le curseur sur une cible donnée.

Un but de la présente invention est de répondre aux inconvénients de l'art antérieur mentionnés ci-dessus et en particulier, tout d'abord, de proposer un procédé de contrôle de la position et/ou du déplacement d'un curseur de visée au moyen d'un dispositif d'actionnement de jeu équipé d'un élément de commande direction permettant d'exploiter au mieux les performances du dispositif d'actionnement de jeu et de fournir à son utilisateur une qualité et une expérience de jeu comparable à celle obtenue avec un clavier et une souris et plus particulièrement d'optimiser la gestion de la visée.

Pour cela un premier aspect de l'invention est défini par la revendication 1.

Un tel procédé permet d'anticiper les mouvements de l'élément de commande de direction et en particulier d'amortir la vitesse de déplacement du curseur à l'écran dès que la dérivée calculée passe sous un seuil prédéterminé indicatif d'un changement futur de direction de l'élément de commande. De plus, l'amortissement de la vitesse de déplacement du curseur en fonction de la vitesse radiale de l'élément de commande permet, de manière générale, un contrôle dynamique des déplacements du curseur avec anticipation des mouvements futurs et, plus particulièrement, d'anticiper un mouvement de retour vers la position centrale ou position de repos de l'élément commande en détectant une vitesse radiale inférieure à un seuil prédéterminé et de réduire en conséquence la vitesse de déplacement du curseur avant arrêt ou changement de direction.

Avantageusement, l'étape d'amortissement de la vitesse de déplacement du curseur consiste à appliquer une première fonction d'amortissement de la vitesse de déplacement du curseur, lorsque la vitesse radiale de l'élément de commande de direction est positive; et à appliquer une deuxième fonction d'amortissement de la vitesse de déplacement du curseur avec un amortissement plus rapide que la première fonction d'amortissement, lorsque la vitesse radiale de l'élément de commande de direction est négative. Un tel procédé améliore encore l'effet d'anticipation des mouvements futurs de l'élément de commande en prenant en compte le signe de la valeur de sa vitesse radiale. En effet, l'utilisation d'un amortissement plus rapide lorsque la valeur est négative permet de réduire plus rapidement la vitesse de déplacement du curseur à l'écran en vue de son arrêt avant d'être déplacé dans une autre direction, par exemple opposée. De cette manière, les changements de direction de l'élément de commande sont anticipés pour le contrôle des déplacements du curseur en introduisant via ces fonctions d'amortissement un effet de lissage évitant les sauts brusques du curseur à l'écran.

Selon une variante avantageuse, la première fonction d'amortissement de la vitesse de déplacement du curseur consiste à pondérer la valeur absolue de la vitesse radiale avec un premier coefficient d'amortissement ($Am_1$), et la deuxième fonction d'amortissement de la vitesse de déplacement du curseur consiste à pondérer la valeur absolue de la vitesse radiale avec un deuxième coefficient d'amortissement ($Am_2$) inférieur au premier coefficient d'amortissement. Dans un mode préféré, le premier coefficient d'amortissement est une valeur réglable entre 0.3 et 0.9, de préférence choisie à 0.4, et le deuxième coefficient d'amortissement est une valeur réglable entre 0 et 0.3, de préférence choisie à 0.1. L'utilisation de tels coefficients d'amortissement pour pondérer la vitesse radiale utilisée pour amortir la vitesse de déplacement du curseur à l'écran assure un amortissement continu pour chacune des deux fonctions d'amortissement, la deuxième fonction assurant un amortissement beaucoup plus rapide comparativement à la première. Alternativement, ces coefficients peuvent être réglables par l'utilisateur en fonction de sa perception de jeu, ou directement par le dispositif d'actionnement de jeu en fonction de son historique d'utilisation, ou encore par une combinaison des deux.

Selon une autre variante avantageuse, la première fonction d'amortissement de la vitesse de déplacement du curseur consiste à pondérer la valeur absolue de la vitesse radiale avec un premier coefficient d'amortissement positif ($Am_{pos}$), et la deuxième fonction d'amortissement de la vitesse de déplacement du curseur consiste à pondérer la valeur absolue de la vitesse radiale avec un deuxième coefficient d'amortissement négatif ($Am_{neg}$). L'utilisation d'un deuxième coefficient d'amortissement négatif lorsque la vitesse radiale calculée est négative permet en plus d'anticiper les changements de direction de l'élément de commande, de prendre en compte un tel changement de direction avant même que l'élément de commande soit incliné de l'autre côté. Ainsi par exemple, un déplacement de l'élément de commande dans une direction (par exemple la gauche) alors même que l'élément de commande peut être encore situé de l'autre côté (à droite) par rapport à sa position de repos, sera pris en compte dynamiquement en fonction de la vitesse radiale calculée.

Avantageusement, le procédé comprend en outre une étape consistant à adapter la vitesse de déplacement du curseur en fonction de la composante angulaire de la vitesse calculée. Ceci permet notamment d'augmenter la jouabilité et l'immersion dans le jeu. L'utilisation de la composante angulaire permet de définir des fonctions additionnelles comme par exemple d'anticiper les trajectoires effectuées par l'utilisateur pour suivre la cible qu'il vise. Selon une variante avantageuse, le procédé comprend une étape consistant à faire pivoter la visée à l'écran dans le même sens que la composante angulaire de l'élément de commande de direction, lorsque la composante angulaire ($V_\theta$) de la vitesse calculée est supérieure à un seuil de vitesse angulaire prédéterminé. L'utilisation d'un seuil de vitesse angulaire permet, lorsque la vitesse angulaire dépasse ce seuil, d'obtenir un effet de vision rotative à l'écran sans influence sur les déplacements du curseur.

Selon une variante avantageuse, le procédé comprend en outre une étape consistant à définir au moins une zone active dans le plan de déplacement, dans laquelle la vitesse de déplacement du curseur est fonction de la position détectée et de la dérivée calculée de l'élément de commande de direction. Une telle variante permet de prendre en compte dans le contrôle du déplacement du curseur à l'écran, la vitesse de déplacement de l'élément de commande de direction dans le plan de déplacement et ainsi d'augmenter la plage de vitesse de déplacement du curseur disponible par rapport à la course de déplacement de l'élément de commande.

Un autre aspect de l'invention concerne un procédé selon la revendication 1, dans lequel l'élément de commande de direction est agencé pour occuper une position de repos ($X_0$, $Y_0$) dans le plan de déplacement, et le procédé comprend des étapes consistant à définir plusieurs zones actives dans le plan de déplacement, dans laquelle la vitesse de déplacement du curseur est définie, en plus de l'application d'une fonction d'amortissement lorsque la dérivée calculée est inférieure à la valeur de référence, de la manière suivante :

- dans une première zone active située autour de la position de repos, la vitesse de déplacement du curseur est fonction de la position détectée de l'élément de commande de direction ; et
- dans au moins une deuxième zone active autour de la première zone active, la vitesse de déplacement du curseur est fonction de la position détectée et de la dérivée calculée de l'élément de commande de direction.

Cette variante permet une meilleure répartition de la vitesse de déplacement du curseur en fonction du déplacement de l'élément de commande de direction, c'est-à-dire son inclinaison ou son déplacement dans le plan de déplacement, tout en augmentant la plage de vitesse de déplacement du curseur disponible par rapport à la course de déplacement de l'élément de commande. En effet, un tel procédé permet de définir une première zone active correspondant à une première portion de la course de l'élément de commande entre la position de repos et une première position intermédiaire, définie par exemple par un cercle de rayon prédéterminé autour de la position de repos, et dans laquelle la vitesse de déplacement du curseur est déterminée, lorsque la vitesse de déplacement de l'élément de commande de direction est supérieure à une valeur de référence, uniquement en fonction de la position de l'élément de commande permettant ainsi d'obtenir un déplacement précis du curseur par exemple pour des séquences de visée, tout en prenant en compte, lorsque la vitesse de déplacement de l'élément de commande de direction est inférieure à une valeur de référence, également une fonction d'amortissement fonction de la vitesse de déplacement de l'élément de commande de direction pour anticiper un prochain changement de direction. Le procédé définit également au moins une deuxième zone active correspondant à une deuxième portion de la course de l'élément de commande entre la première position intermédiaire et une deuxième position intermédiaire, définie par un cercle de rayon plus large que celui de la première position intermédiaire, et dans laquelle la vitesse de déplacement du curseur prend en compte un facteur additionnel à savoir la vitesse de déplacement de l'élément de commande de sorte à obtenir une visée plus réactive et surtout une plage de vitesse plus étendue compensant ainsi la course limitée de l'élément de commande, tout en prenant en compte, lorsque la vitesse de déplacement de l'élément de commande de direction est inférieure à une valeur de référence, également une fonction d'amortissement fonction de la vitesse de déplacement de l'élément de commande de direction pour anticiper un prochain changement de direction.

Avantageusement, le procédé comprend en outre les étapes consistant à définir une troisième zone active dans le plan de déplacement autour de la deuxième zone active, dans laquelle la vitesse de déplacement du curseur est fonction de la position détectée et de la dérivée calculée de l'élément de commande de direction ; et à répartir les vitesses de déplacement du curseur, lorsque la vitesse de déplacement de l'élément de commande de direction calculée est supérieure à la valeur de référence. Les vitesses de déplacement du curseur sont réparties entre :

- des vitesses de marche ou d'ajustement de visée comprises entre une vitesse nulle et une première vitesse intermédiaire lorsque la position détectée est située dans la première zone active.
- des vitesses de course ou de poursuite de cible comprises entre la première vitesse intermédiaire et une deuxième vitesse intermédiaire supérieure à la première vitesse intermédiaire lorsque la position détectée est située dans la deuxième zone active ; et
- des vitesses de sprint comprises entre la deuxième vitesse intermédiaire et une vitesse maximale lorsque la position détectée est située dans la troisième zone active.

Cette répartition des vitesses de déplacement du curseur est avantageuse dans la mesure où les mouvements autour de position de repos ou petits mouvements correspondent en général à des phases de marche ou d'ajustement du curseur sur la cible et nécessitent donc plus de précision, tandis que les mouvements de l'élément de commande dans une position éloignée par rapport à la position de repos ou grands mouvements sont plus souvent destinés à des phases de course ou de poursuite afin de positionner rapidement le curseur au voisinage d'une cible éloignée.

Les différentes zones actives sont avantageusement réglables par l'utilisateur. En particulier, l'utilisateur pourra choisir la répartition des zones actives en fonction de la course totale de l'élément de commande de direction.

Alternativement les zones actives pourront être prédéterminées. La course de l'élément de commande de direction est limitée par une zone de butée située en périphérie de la troisième zone active, la première zone active s'étendant de la position de repos à une position correspondant à 65% de la distance de course, la deuxième zone active s'étendant entre 65% et 90% de la distance de course et la troisième zone active s'étendant entre 90% de la distance de course et la zone de butée périphérique. Une telle répartition des différentes vitesses de déplacement du curseur permet de laisser une course importante (0-65%) pour les petits déplacements de marche ou de visée nécessitant une plus grande précision, une course moyenne (65-90%) pour les déplacements plus importants de course ou de suivi rapide de cible nécessitant une précision équilibrée avec la vitesse de déplacement du curseur, et enfin une course réduite (90-100%) pour les déplacements rapides de sprint nécessitant peu de précision en comparaison de la vitesse de déplacement du curseur.

Avantageusement, une zone morte statique (ZMS) est définie autour de la position de repos ($X_0$, $Y_0$) et dans laquelle les déplacements de l'élément de commande de direction ne sont pas pris en considération, la première zone active s'étendant autour de la zone morte statique. L'utilisation d'une telle zone morte statique permet de s'affranchir des petits mouvements indésirables de l'élément de commande autour de la position de repos. Selon une variante avantageuse, les déplacements de l'élément de commande dans la zone morte statique ne sont pas pris en considération uniquement lorsque la vitesse de déplacement de l'élément de commande est inférieure au seuil de vitesse prédéterminé. Lorsque les déplacements dans la zone morte statique ne sont pas pris en considération, le procédé transmet une valeur prédéfinie par exemple celle de la position de repos.

Un autre aspect de l'invention concerne un procédé selon la revendication 1, dans lequel, l'élément de commande de direction est agencé pour occuper une position de repos et présente une zone morte statique définie par un déplacement prédéterminé autour de la position de repos, et le procédé comprend en outre les étapes consistant à définir une zone morte dynamique décalée (ZMDD) autour de la position détectée dite position de maintien, lorsque la position détectée est située en dehors de la zone morte statique ; et à activer la zone morte dynamique décalée en fonction de ladite au moins une dérivée calculée. Un tel procédé de contrôle permet de tenir compte et d'exploiter les mouvements de l'élément de commande de direction et de compenser en partie les défauts liés à l'utilisation de la zone morte statique usuelle. En effet, un tel procédé permet de définir une zone morte dynamique décalée par rapport à la zone morte statique en fonction des positions successives détectées de l'élément de commande de direction en dehors de la zone morte statique. Une telle zone morte dynamique décalée, lorsqu'elle est activée, permet d'obtenir une stabilité du curseur de visée en dehors de la zone morte statique autour de la position de maintien et ainsi assurer une précision de visée nettement améliorée.

On comprendra que tous lesdits aspects de l'invention, ainsi que les variantes avantageuses relatives à ces aspects, peuvent être combinés les uns avec les autres, ou tous ensemble, dans la mesure de leur compatibilité technique.

Un exemple destiné à faciliter la compréhension de l'invention concerne un procédé de contrôle d'une position et/ou d'un déplacement d'un curseur de visée sur un écran au moyen d'un dispositif d'actionnement de jeu équipé d'au moins un élément de commande de direction ayant une amplitude de mouvement limitée et agencé pour se déplacer selon au moins deux axes de déplacement (X, Y) formant un plan de déplacement, le curseur ayant une vitesse de déplacement ($V_C$), le procédé comprenant les étapes consistant à détecter une position ($X_J$, $Y_J$) de l'élément de commande de direction dans ledit plan de déplacement ; calculer au moins une dérivée ($V_J$) d'ordre au moins un par rapport au temps de la position de l'élément de commande de direction en fonction d'un historique des positions détectées ; comparer la dérivée calculée ($V_J$) avec une valeur de référence ($V_{REF}$) ; et lorsque la dérivée calculée est inférieure à la valeur de référence, amortir la vitesse de déplacement du curseur ($V_C$) à l'écran en fonction de la dérivée calculée ; et dans lequel, ladite au moins une dérivée calculée est un vecteur d'accélération. L'utilisation de la dérivée seconde par rapport au temps permet d'accroître la réactivité de la vitesse de déplacement du curseur déterminée tout en anticipant les déplacements à venir effectués par l'utilisateur. Ainsi par exemple, une décision de l'utilisateur d'arrêter son mouvement pour maintenir une vitesse de croisière pourra être anticipée dès la détection d'une phase de décélération (i.e. une décroissance de la magnitude du vecteur accélération) alors même que l'élément de commande continue à se déplacer dans la même direction. De même une décision de changement de direction pourra être anticipée en utilisant la direction du vecteur d'accélération.

Quelque soit le(s) mode(s) de réalisation considéré(s) selon l'un ou plusieurs des quatre premiers aspects, l'élément de direction est avantageusement un stick directionnel ou un levier de joystick. Un tel levier de joystick ou stick directionnel permet d'imiter le comportement d'une souris malgré la course limitée du joystick/stick.

Quelque soit le(s) mode(s) de réalisation considéré(s) selon l'un ou plusieurs des quatre premiers aspects, le procédé peut comprendre en outre une étape consistant à transmettre des données de contrôle de la position et/ou le déplacement du curseur par le dispositif d'actionnement de jeu à une unité de traitement numérique contrôlant la progression d'un jeu vidéo ainsi que le curseur à l'écran.

Un mode de réalisation non compris dans l'invention revendiquée concerne un procédé de contrôle d'une position et/ou d'un déplacement d'un curseur de visée plus général englobant l'un ou plusieurs des autre aspects mentionnés ci-dessus et comprenant en outre les étapes suivantes :

- initialisation d'une pluralité de paramètres ;
- acquisition de données relatives au déplacement de l'élément de commande ;
- gestion d'une zone morte statique ;
- gestion d'une zone morte dynamique décalée ;
- gestion dynamique de la position et/ou du déplacement de l'élément de commande conformément au cinquième aspect sus-décrit ;
- traitement et transmission des données pertinentes par le dispositif d'actionnement de jeu à l'unité de traitement numérique pour le déplacement du curseur de visée.

Selon un autre aspect, la présente invention concerne un dispositif d'actionnement de jeu comprenant au moins un élément de commande de direction ayant une amplitude de mouvement limitée et agencé pour se déplacer selon au moins deux axes de déplacement (X, Y) formant un plan de déplacement ; un capteur de position agencé pour détecter une position de l'élément de commande de direction dans ledit plan de déplacement ; et des moyens de traitement agencés pour la mise en œuvre du procédé de contrôle selon l'un quelconque des modes de réalisation de l'un ou plusieurs aspects de l'invention, comme mentionnés ci-dessus.

Selon une variante de réalisation, le dispositif d'actionnement de jeu comprend en outre des moyens de communication avec une unité de traitement numérique agencés pour transmettre des données de contrôle de la position et/ou le déplacement du curseur.

Un tel dispositif d'actionnement de jeu selon cet aspect de l'invention présente une réactivité et une précision plus grande en particulier pour les jeux vidéo sur ordinateur impliquant une visée.

D'autres caractéristiques et avantages de la présente invention apparaîtront plus clairement à la lecture de la description détaillée qui suit de modes de mises en œuvre de l'invention donnés à titre d'exemple nullement limitatifs et illustrés par les dessins annexés, dans lesquels :

- la figure 1 représente un procédé de contrôle de la position et/ou du déplacement d'un curseur de visée selon un premier mode de mise en œuvre de l'invention ;
- la figure 2 représente un procédé de contrôle de la position et/ou du déplacement d'un curseur de visée selon un deuxième mode de mise en œuvre de l'invention ;
- la figure 3 représente le plan de déplacement d'un joystick/stick ;
- la figure 4 représente un exemple de courbes de réponse du déplacement du curseur suivant la position et la vitesse du joystick/stick ;
- la figure 5 représente, de manière générale, un procédé de contrôle d'un curseur de visée sur un écran au moyen d'un joystick/stick selon le cinquième aspect de l'invention ;
- la figure 6 représente une phase d'initialisation du procédé ;
- la figure 7 représente une phase d'acquisition de données relatives au déplacement du joystick/stick ;
- la figure 8 représente un procédé de contrôle de la zone morte statique d'un joystick/stick ;
- la figure 9 représente un procédé de contrôle de la zone morte dynamique décalée d'un joystick/stick ;
- la figure 10 représente la mise en œuvre d'une fonction d'amortissement lors de l'activation de la zone morte dynamique décalée ;
- la figure 11 représente une méthode de configuration de la zone morte statique ;
- la figure 12 représente schématiquement un joystick/stick selon un mode de réalisation selon le sixième aspect de l'invention.

Dans la suite de la présente description, par souci de simplification, il est fait référence uniquement à un joystick pour indiquer indistinctement le dispositif d'actionnement de jeu, i.e. le joystick lui-même, et l'élément de commande de direction, i.e. le levier de commande du joystick. Dans les modes de mise en œuvre présentés ci-après, le joystick se déplace suivant deux axes X et Y formant de préférence un plan de déplacement, bien que cela soit également possible pour des déplacements suivant un seul axe ou trois axes. On comprendra encore que cela s'applique de la même manière à tout dispositif de jeu muni d'un élément de commande direction comme par exemple une manette de jeu équipée d'un stick. Concernant le déplacement du joystick/stick, on pourra parler de déplacement dans le plan de déplacement ou alternativement parler d'inclinaison entre la position de repos et une position en butée dans laquelle le joystick présente une inclinaison maximale suivant la réalisation mécanique particulière de l'élément de commande de direction, à savoir le levier du joystick ou le stick.

Il est également fait mention de l'interaction avec un système d'imagerie et de sons tel qu'un écran relié à une unité de traitement numérique comme par exemple un ordinateur personnel, et en particulier dans le cadre d'un jeu vidéo présentant un curseur sur l'écran pour assurer une visée. Les différentes données, en particulier de position, de vitesse, et d'accélération, ainsi que les paramètres prédéfinis par l'utilisateur sont stockées dans des mémoires volatile ou non volatile suivant les besoins. L'utilisation de tels moyens de stockage n'est pas explicitement mentionnée par la suite. La transmission des données fait référence de manière générale à la communication des données pertinentes par le joystick/stick à l'unité de traitement numérique pour l'avancement du jeu.

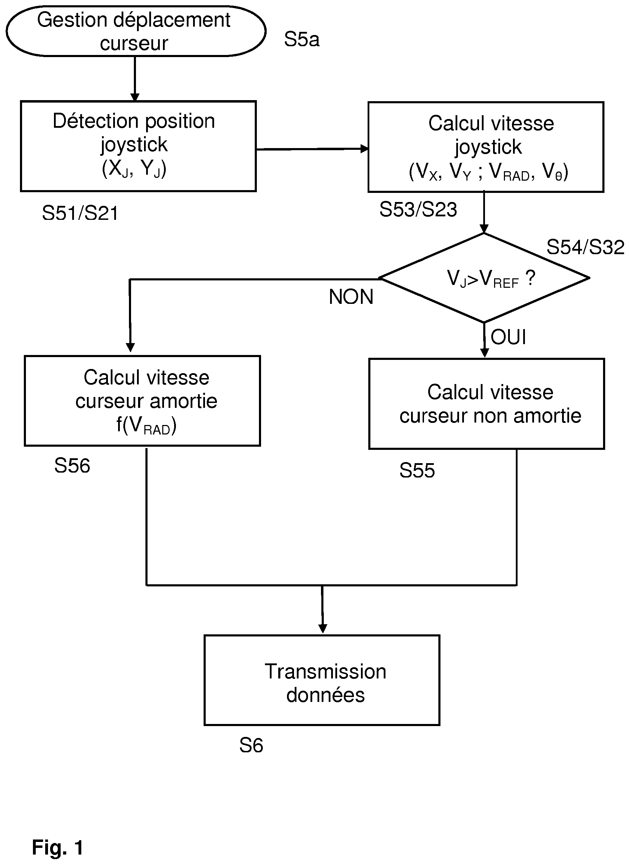

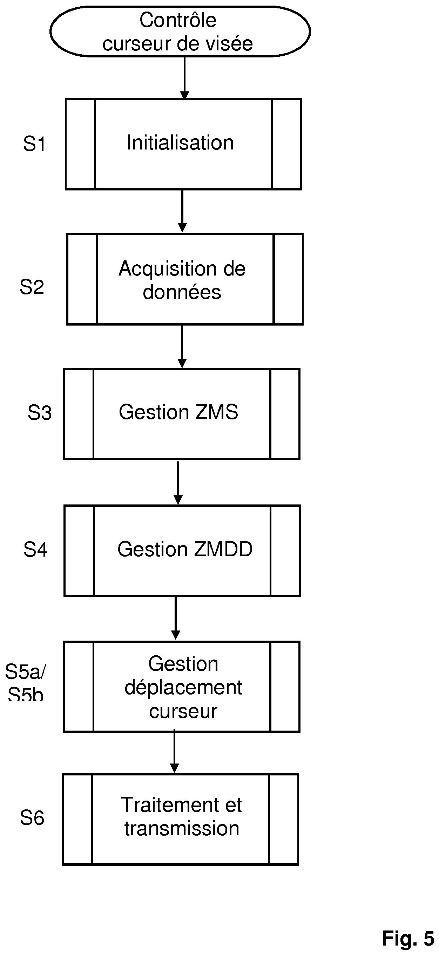

La figure 1 représente un procédé de contrôle de la position et/ou du déplacement d'un curseur de visée selon un premier mode de mise en œuvre de l'invention, appelé « gestion déplacement curseur », correspondant à un contrôle du déplacement du curseur avec fonction d'amortissement. Ce mode de gestion du déplacement du curseur S5a peut avantageusement être intégré dans un procédé plus général qui sera décrit en lien avec la figure 5.

Une étape S51, qui dans le cadre du procédé général est réalisée lors de l'étape S21, consiste à détecter la position $(X_J, Y_J)$ du joystick/stick dans le plan de déplacement, par exemple suivant les deux axes de déplacement par rapport à la position de repos considérée initialement comme la position centrale $(X_0, Y_0)$. La détection de la position du joystick est réalisée périodiquement et de préférence à haute fréquence de sorte à être capable de détecter tous les mouvements réalisés par l'utilisateur. La fréquence d'échantillonnage utilisée est choisie de préférence entre 125 et 500 Hz. Une fréquence élevée, comme par exemple 500 Hz, sera particulièrement avantageuse en ce qu'elle permet de réaliser des calculs sur un historique de positions détectées plus important avant que les données ne soient transmises à un système d'imagerie et de sons.

Une étape S52 optionnelle, non représentée sur la figure 1 et correspondant à l'étape S22, consiste à transformer la position du joystick détectée dans un système de coordonnées prédéterminé.

Une étape S53, correspondant à l'étape S23, consiste à déterminer la vitesse $V_J$ de déplacement du joystick sur la base des positions détectées successivement à l'étape S51 (respectivement S21). La détermination de la vitesse est également réalisée périodiquement, et de préférence à la même fréquence que celle utilisée pour la détection de position, de sorte à tenir compte des changements de vitesse en temps réel. La vitesse du joystick ($V_X$, $V_Y$ ; $V_{RAD}$, $V_\theta$) pourra être déterminée aux moyens de coordonnées cartésiennes et/ou de coordonnées polaires selon les besoins

Une étape S54 consiste à comparer la vitesse du joystick avec un seuil de vitesse $V_{REF}$ prédéterminé afin de déterminer si la vitesse de déplacement du curseur doit être amortie ou non. Si la vitesse $V_J$ de déplacement du joystick est supérieure au seuil de vitesse $V_{REF}$ prédéterminé, le procédé passe à l'étape S55. Si, par contre, la vitesse $V_J$ de déplacement du joystick est inférieure au seuil de vitesse $V_{REF}$ prédéterminé, le procédé passe à l'étape S56.

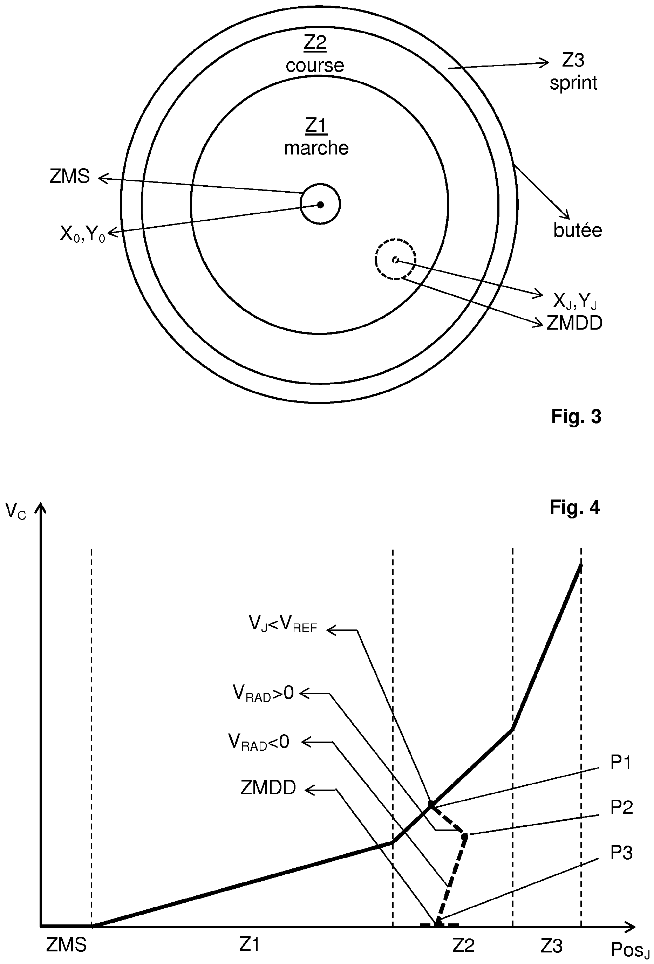

A l'étape S55, c'est-à-dire lorsque la vitesse $V_J$ de déplacement du joystick est supérieure au seuil de vitesse $V_{REF}$ prédéterminé, le joystick calcule la vitesse de déplacement du curseur non amortie conformément à une courbe de réponse prédéfinie du joystick basée sur la position du joystick et éventuellement également sur la vitesse du joystick selon la position du joystick, comme cela décrit plus en détail aux figures 3 et 4. Le procédé continue ensuite à l'étape S6.

L'étape S56, c'est-à-dire lorsque la vitesse $V_J$ de déplacement du joystick est inférieure au seuil de vitesse $V_{REF}$ prédéterminé, consiste à calculer une vitesse de déplacement du curseur amortie en fonction de la vitesse radiale du joystick. La fonction d'amortissement est avantageusement choisie selon la forme suivante :

$$f_A = A.|V_{RAD}| \tag{1}$$

où A représente un coefficient d'amortissement sélectionné entre 0 et 1. Ainsi lorsque la vitesse radiale diminue, la vitesse de déplacement du curseur est amortie en conséquence. Le procédé continue ensuite à l'étape S6.

Au cours de l'étape S6, les données de vitesse de déplacement de curseur non amortie (S55) ou amortie (S56) sont ensuite transmises à l'unité de traitement numérique pour commander le déplacement correspondant du curseur à l'écran.

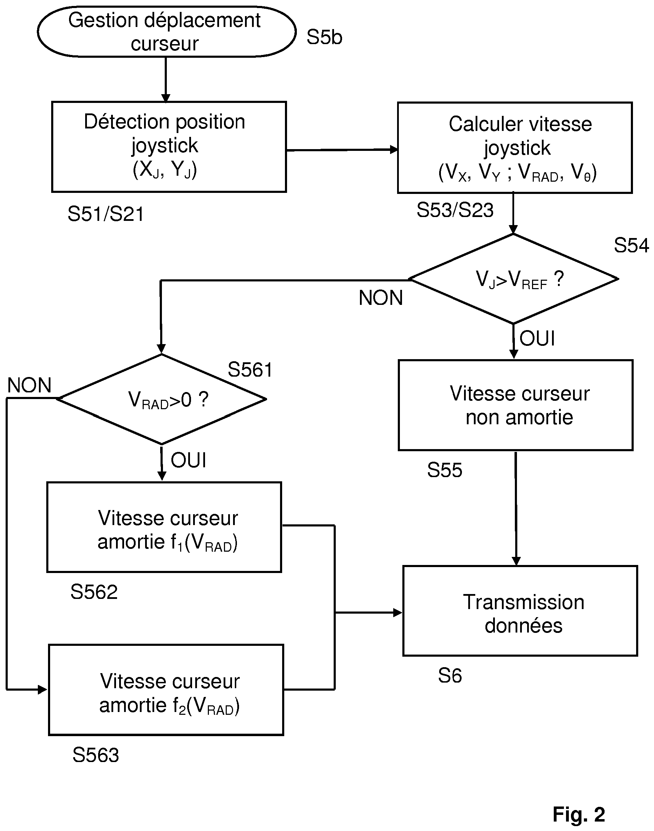

La figure 2 représente un procédé de contrôle de la position et/ou du déplacement d'un curseur de visée selon un deuxième mode de mise en œuvre de l'invention, également appelé « gestion déplacement curseur », correspondant à un contrôle du déplacement du curseur avec fonction d'amortissement. Ce mode de gestion de déplacement du curseur S5b peut avantageusement être intégré dans un procédé plus général qui sera décrit en lien avec la figure 5.

Les étapes S51 à S55 étant identiques au mode S5a, elles ne seront pas répétées ici.

L'étape S561 consiste à détecter le sens de la vitesse radiale du joystick/stick, c'est-à-dire à savoir si elle est positive ou négative, autrement dit si le joystick s'éloigne ou se rapproche de sa position de repos. Si la vitesse radiale $V_{RAD}$ du joystick est positive, le procédé passe à l'étape S562. Si, par contre, la vitesse radiale $V_{RAD}$ du joystick est négative, le procédé passe à l'étape S563.

A l'étape S561, c'est-à-dire lorsque la vitesse radiale $V_{RAD}$ du joystick est positive, le joystick calcule une vitesse de déplacement du curseur amortie au moyen d'une première fonction $f_1(V_{RAD})$ de la vitesse radiale du joystick. Cette première fonction est avantageusement sous la forme suivante :

$$f_1 = A_1.|V_{RAD}| \tag{2}$$

où $A_1$ représente un premier coefficient d'amortissement sélectionné entre 0 et 1.

L'étape S562, c'est-à-dire lorsque la vitesse radiale $V_{RAD}$ du joystick est négative, consiste à calculer une vitesse de déplacement du curseur amortie au moyen d'une deuxième fonction $f_2(V_{RAD})$ de la vitesse radiale du joystick. Cette deuxième fonction est avantageusement sous la forme suivante :

$$f_2 = A_2.|V_{RAD}| \tag{3}$$

où $A_2$ représente un deuxième coefficient d'amortissement compris entre 0 et 1, inférieur au premier coefficient d'amortissement $A_1$.

Au cours de l'étape S6, les données de vitesse de déplacement de curseur non amortie (S55) ou amortie (S562 ou S563) sont ensuite transmises à l'unité de traitement numérique pour commander le déplacement correspondant du curseur à l'écran.

La figure 3 représente le plan de déplacement d'un joystick/stick. Au centre, se trouve la position de repos du joystick/stick définie par les coordonnées $X_0$, $Y_0$. Autour de la position de repos, on définit avantageusement une zone morte statique ZMS dans laquelle les mouvements du joystick/stick ne seront normalement pas pris en considération. La présence d'une ZMS est facultative même si elle apporte une stabilité du curseur. Autour de la ZMS sont définies, avantageusement de manière concentriques, une première zone active Z1, au moins une deuxième zone active Z2 (autour de Z1) et avantageusement une troisième zone active Z3 (autour de Z2). La périphérie extérieure de la zone active Z3 représente la butée mécanique du joystick/stick.

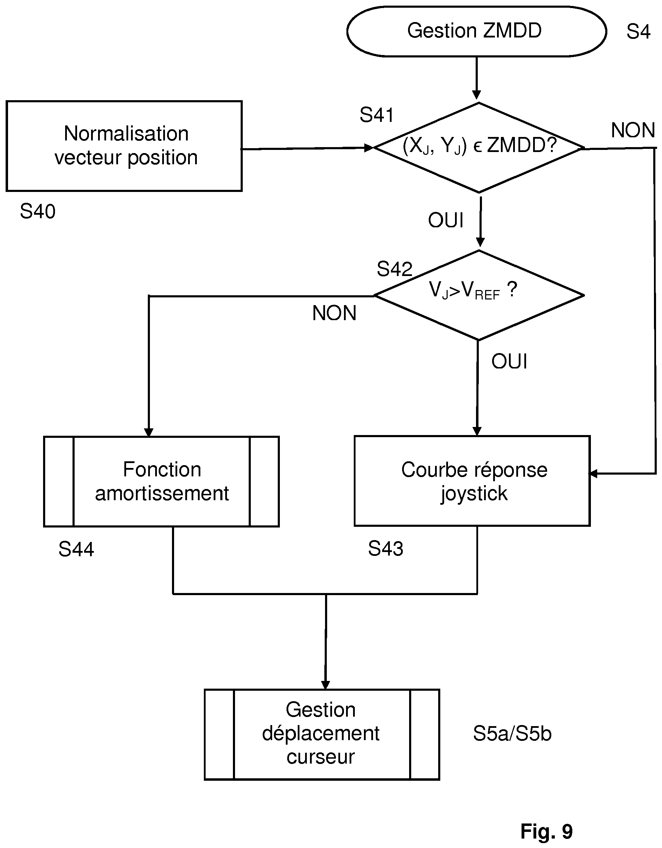

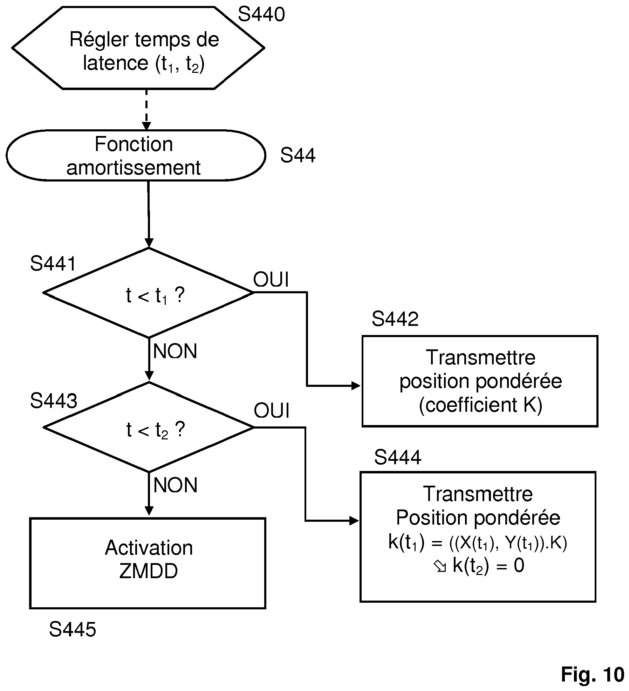

Les trois zones actives Z1-Z3 sont utilisées pour permettre une répartition des vitesses de déplacement du curseur. Par exemple, la première zone active Z1 est utilisée pour définir la vitesse de déplacement du curseur comme une vitesse de marche ou d'ajustement de visée. La deuxième zone active Z2 est utilisée pour définir la vitesse de déplacement du curseur comme une vitesse de course ou de poursuite de cible. La troisième zone active Z3 est utilisée pour définir la vitesse de déplacement du curseur comme une vitesse de sprint. Comme il sera expliqué en lien avec les figures 9 et 10, une zone morte dynamique décalée ZMDD peut être activée autour de la position actuelle du joystick/stick, représentée par exemple par les coordonnées $X_J$, $Y_J$ d'un point situé dans la première zone active sur la figure 3. Cette répartition des vitesses de déplacement du curseur prenant en compte la position et la vitesse du joystick dans le calcul de la vitesse de déplacement du curseur permet d'imiter le comportement d'une souris malgré la course limitée du joystick/stick.

La figure 4 représente un exemple de courbes de réponse du déplacement du curseur suivant la position et la vitesse du joystick/stick. On notera à cet effet que les courbe de réponse du joystick/stick définissant le comportement du curseur à l'écran en fonction de la zone dans laquelle se situe le joystick/stick, peuvent être définies par l'utilisateur.

Comme cela a été expliqué ci-dessus en relation avec la figure 3, le plan de déplacement du joystick/stick est avantageusement divisé en au moins deux et de préférence trois zones actives dans lesquelles la vitesse de déplacement du curseur est calculée différemment, tout en prenant en compte, quelque soit la zone active dans laquelle le joystick/stick est situé, une fonction d'amortissement lorsque la vitesse de déplacement du joystick/stick est inférieure à une valeur de référence.

Ainsi lorsque le joystick/stick est situé dans la zone morte statique, la vitesse de déplacement du curseur est maintenue nulle.

Lorsque le joystick/stick est situé dans la première zone active Z1 et que sa vitesse de déplacement est supérieure à la vitesse de référence $V_{REF}$, la vitesse de déplacement du curseur est calculée en fonction de la position détectée du joystick/stick, par exemple avec une fonction affine. Si la vitesse de déplacement du joystick/stick est inférieure à la vitesse de référence $V_{REF}$, la vitesse de déplacement du curseur est alors amortie en fonction de la vitesse de déplacement du joystick/stick comme cela sera expliqué plus en détail ci-après avec un exemple dans la zone active Z2.

Lorsque le joystick/stick est situé dans la deuxième zone active Z2, la vitesse de déplacement du curseur est calculée en fonction de la position détectée et de la vitesse calculée du joystick/stick, permettant d'obtenir une augmentation non linéaire (i.e. une accélération) de la vitesse de déplacement du curseur par rapport à la vitesse calculée dans la première zone active.

Lorsque le joystick/stick est situé dans la troisième zone active Z3, la vitesse de déplacement du curseur est également calculée en fonction de la position détectée et de la vitesse calculée du joystick/stick, en y ajoutant un coefficient d'accroissement permettant d'obtenir à nouveau une augmentation non linéaire de la vitesse de déplacement du curseur par rapport à la vitesse calculée dans la deuxième zone active.

Comme cela a été expliqué notamment en relation avec la figure 2, lorsque la vitesse du joystick/stick décroit et passe sous une valeur de référence $V_{REF}$, la vitesse de déplacement du curseur calculée est amortie de sorte à anticiper un changement de direction ou l'arrêt du joystick/stick dans une position déterminée.

Sur la figure 4, un exemple de l'amortissement de la vitesse de déplacement du curseur est représenté. Dans cet exemple, le joystick/stick est situé au point P1 dans la zone active Z2 lorsque la vitesse du joystick/stick devient inférieure à la vitesse de référence. La valeur de la vitesse radiale est alors encore positive (i.e. le joystick/stick s'éloigne de la position de repos) et la première fonction d'amortissement $f_1$ est appliquée à la vitesse de déplacement du curseur de sorte à la réduire jusqu'à atteindre un point P2 où la vitesse radiale est nulle. Par la suite, lorsque la valeur de la vitesse radiale devient négative (i.e. le joystick/stick revient vers la position de repos), la deuxième fonction d'amortissement $f_2$ est appliquée à la vitesse de déplacement du curseur de sorte à la réduire encore plus rapidement jusqu'à l'arrêt du curseur au point P3. La zone morte dynamique décalée ZMDD est activée.

La figure 5 représente, de manière générale, un procédé de contrôle d'un curseur de visée sur un écran au moyen d'un joystick/stick selon un cinquième aspect de l'invention.

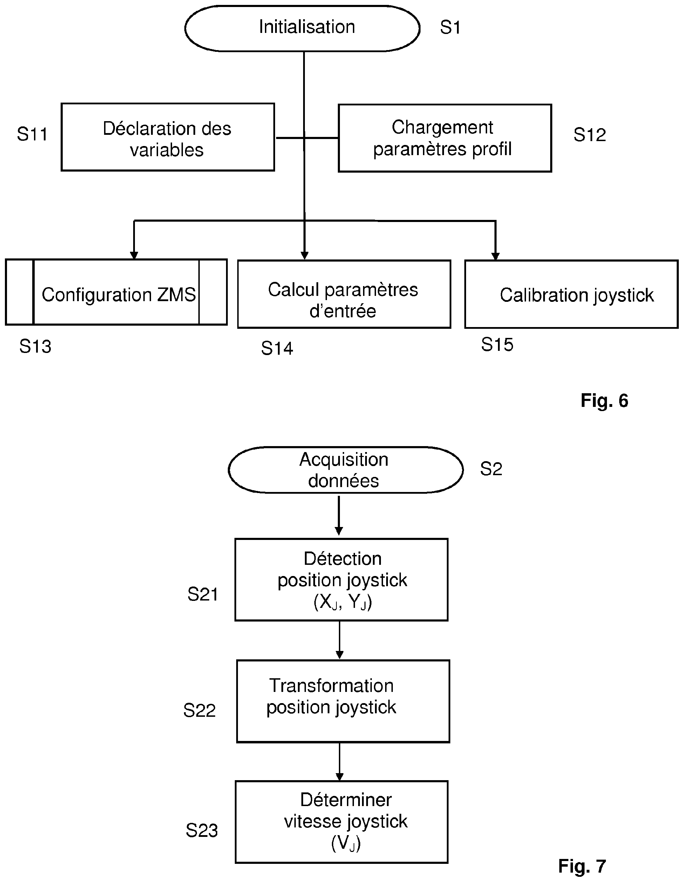

Une étape préliminaire S1 consiste à initialiser, configurer, calibrer et calculer un certain nombre de paramètres, décrite plus en détail en lien avec la figure 6.

Une étape S2 consiste dans l'acquisition de données relatives au déplacement du joystick/stick, décrite plus en détail en lien avec la figure 7.

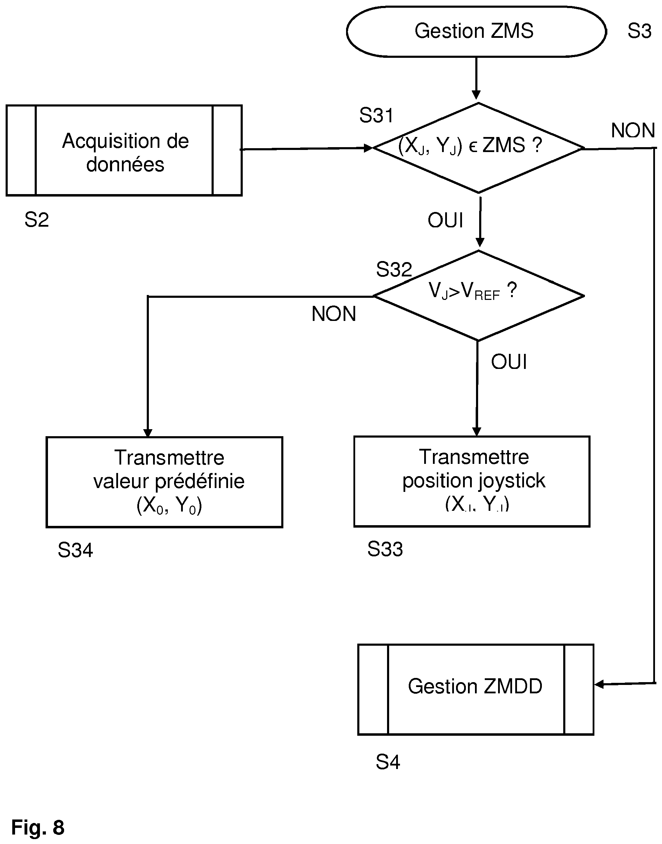

Une étape S3 consiste dans la gestion d'une zone morte statique, décrite plus en détail en lien avec la figure 8.

Une étape S4 consiste dans la gestion d'une zone morte dynamique décalée, décrite plus en détail en lien avec la figure 9.

Une étape S5 consiste dans la gestion du déplacement du curseur, qui a été décrite en détail en lien avec les figures 1 et 2.

Enfin, l'étape S6 consiste dans le traitement et la transmission de données pertinentes par le joystick ou la manette de jeu munie d'un stick à l'unité de traitement numérique pour le déplacement du curseur de visée sur l'écran.

La figure 6 représente la phase d'initialisation du procédé dont certaines étapes sont réalisées une fois au début et n'ont plus besoin d'être réitérées lors de l'exécution du procédé.

Les étapes S11 et S12 consistent dans la déclaration de variables et dans le chargement de paramètres liés au profil de l'utilisateur. Par exemple, les paramètres et variables suivants pourront être réglés par l'utilisateur ou déterminés par le joystick ou la manette de jeu munie d'un stick : sensibilité sur les axes X et Y de déplacement du joystick/stick, seuil de vitesse pour (ré)activation d'une zone morte dynamique décalée, rayon du disque de la zone morte (statique et/ou dynamique), temps de latence pour activation de la fonction d'amortissement et/ou de la zone morte dynamique décalée, courbes de réponse du joystick/stick.

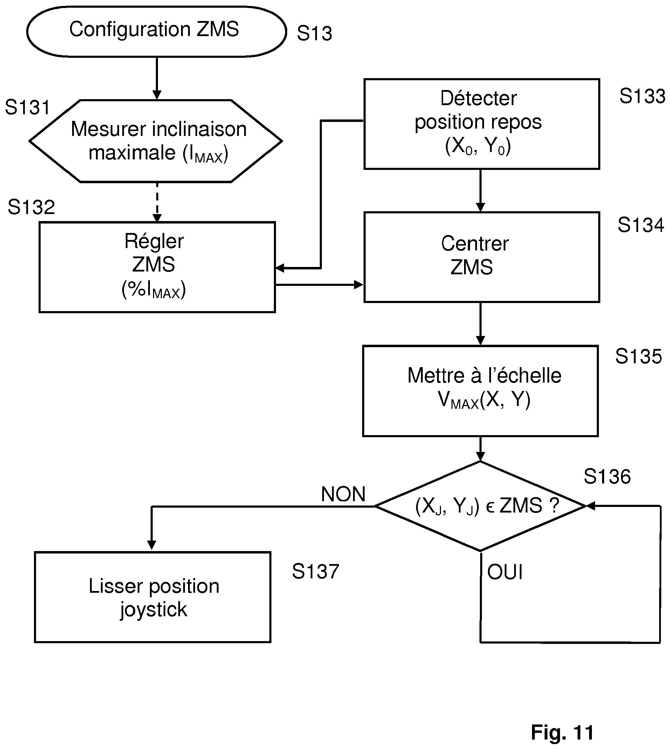

L'étape S13 consiste dans la configuration de la zone morte statique, décrite plus en détail en lien avec la figure 11.

L'étape S14 consiste dans le calcul et/ou la définition de paramètres utilisés dans le cadre du procédé, comme par exemple la fonction d'amortissement lors de l'activation de la zone morte dynamique décalée.

L'étape S15 consiste dans la calibration pour compenser le mauvais centrage éventuel du joystick/stick sur les axes X et Y notamment en cas de dérive de la position de repos. Dans le cas particulier d'un joystick avec inclinaison, un traitement consiste à renseigner par le biais d'une saisie effectuée par l'utilisateur, l'angle maximal d'inclinaison du joystick et à calculer sa position réelle. En effet, les données fournies par le joystick mesurent en général l'inclinaison de ce dernier sur deux axes, l'axe horizontal et l'axe vertical. La position réelle peut être alors calculée en tenant compte de l'inclinaison maximale préalablement renseignée. La position réelle est calculée. Selon un premier exemple destiné à faciliter la compréhension de l'invention, la position calculée dite normée est définie comme l'angle d'inclinaison du joystick à un facteur près indépendamment de la direction suivie. Selon un deuxième exemple destiné faciliter la compréhension de l'invention, la position réelle est calculée en tenant compte de la position normée et de la direction d'inclinaison de sorte que la position du joystick est interprétée comme un point mobile se déplaçant sur une sphère, la position normée correspondant à la longueur de l'arc de cercle joignant le joystick au point central, normalement le point de repos. Selon l'invention revendiquée, la position est calculée comme étant le projeté de sa position sur le plan équatorial de la sphère dont le pôle nord correspond à la position centrale. Concrètement la direction reste la même que dans le deuxième exemple mais la norme de la position est le sinus de la norme précédente.

La figure 7 représente une phase d'acquisition de données relatives au déplacement du joystick/stick.

Une étape S21 consiste à détecter la position $(X_J, Y_J)$ du joystick/stick suivant les deux axes de déplacement par rapport à la position de repos considérée initialement comme la position centrale $(X_0, Y_0)$. La détection de la position du joystick/stick est réalisée périodiquement et de préférence à haute fréquence de sorte à être capable de détecter tous les mouvements réalisés par l'utilisateur. La fréquence d'échantillonnage utilisée est choisie de préférence entre 125 et 500 Hz. Une fréquence élevée, comme par exemple 500 Hz, sera particulièrement avantageuse en ce qu'elle permet de réaliser des calculs sur un historique de positions détectées plus important avant que les données ne soient transmises à un système d'imagerie et de sons.

Une étape S22 optionnelle consiste à transformer la position du joystick/stick détectée dans un système de coordonnées prédéterminé.

Une étape S23 consiste à déterminer la vitesse $V_J$ de déplacement du joystick/stick sur la base des positions détectées successivement à l'étape S2. La détermination de la vitesse est également réalisée périodiquement, et de préférence à la même fréquence que celle utilisée pour la détection de position, de sorte à tenir compte des changements de vitesse en temps réel.

La figure 8 représente la gestion de la zone morte statique (ZMS) du joystick/stick. On entend par gestion de la zone morte statique, un réglage qui se base sur la position, le mouvement et la vitesse du joystick/stick obtenus à l'étape S2 d'acquisition de données.

Une étape S31 consiste à déterminer si la position $(X_J, Y_J)$ détectée est située dans la zone morte statique ou non. Si la position détectée se situe dans la zone morte statique, le procédé passe à l'étape S32, sinon il passe à l'étape S4 de gestion d'une zone morte dynamique décalée, décrit plus en détail en lien avec la figure 9.

L'étape S32, c'est-à-dire lorsque la position détectée se situe dans la zone morte statique, consiste à comparer la vitesse du joystick/stick avec un seuil de vitesse $V_{REF}$ prédéterminé afin de déterminer comment doivent être gérées les données de position détectées dans la zone morte statique suivant la vitesse de déplacement du joystick/stick. Si la vitesse $V_J$ de déplacement du joystick/stick est supérieure au seuil de vitesse $V_{REF}$ prédéterminé, le procédé de contrôle passe à l'étape S33. Si, par contre, la vitesse $V_J$ de déplacement du joystick/stick est inférieure au seuil de vitesse $V_{REF}$ prédéterminé, le procédé de contrôle passe à l'étape S34.

A l'étape S33, c'est-à-dire lorsque la vitesse $V_J$ de déplacement du joystick/stick est supérieure au seuil de vitesse $V_{REF}$ prédéterminé, le joystick ou la manette de jeu munie d'un stick transmet des données de position relatives à la position $(X_J, Y_J)$ du joystick/stick. Le procédé retourne ensuite à l'étape S2 d'acquisition de données pour la prochaine mesure de position du joystick/stick.

L'étape S34, c'est-à-dire lorsque la vitesse $V_J$ de déplacement du joystick/stick est inférieure au seuil de vitesse $V_{REF}$ prédéterminé, consiste à transmettre une valeur prédéfinie à la place de la position effectivement détectée. Cette valeur est choisie de préférence comme étant la position de repos $(X_0, Y_0)$ du joystick/stick, ou une valeur nulle, dans la mesure où il n'est pas souhaitable de retranscrire de légers déplacements du joystick/stick, i.e. à faible vitesse, dans la zone morte statique, c'est-à-dire autour de la position de repos. Ensuite, le procédé retourne à l'étape S2 d'acquisition de données pour une nouvelle mesure de la position du joystick/stick.

La figure 9 représente la gestion de la zone morte dynamique décalée (ZMDD) du joystick/stick.

De manière optionnelle, lorsque le procédé passe de la gestion de la zone morte statique à la gestion d'une zone morte dynamique décalée, il peut être prévu une étape S40 de normalisation du vecteur position.

Une étape S41 consiste à déterminer si la position $(X_J, Y_J)$ détectée est située dans la zone morte dynamique décalée ou non. Si la position détectée se situe dans la zone morte dynamique décalée, le procédé passe à l'étape S42, sinon il passe à l'étape S43 de transmission de données de position conformément à une courbe de réponse prédéfinie du joystick/stick.

L'étape S42, c'est-à-dire lorsque la position détectée se situe dans la zone morte dynamique décalée, consiste à comparer la vitesse du joystick/stick avec un seuil de vitesse $V_{REF}$ prédéterminé afin de déterminer comment doivent être gérées les données de position détectées dans la zone morte dynamique décalée suivant la vitesse de déplacement du joystick/stick. Si la vitesse $V_J$ de déplacement du joystick/stick est supérieure au seuil de vitesse $V_{REF}$ prédéterminé, le procédé passe à l'étape S43. Si, par contre, la vitesse $V_J$ de déplacement du joystick/stick est inférieure au seuil de vitesse $V_{REF}$ prédéterminé, le procédé passe à l'étape S44.

A l'étape S43, c'est-à-dire lorsque la vitesse $V_J$ de déplacement du joystick/stick est supérieure au seuil de vitesse $V_{REF}$ prédéterminé ou lorsque la position détectée est en dehors de la zone morte dynamique décalée, le joystick ou la manette de jeu munie d'un stick transmet des données de position conformément à une courbe de réponse prédéfinie du joystick/stick. Le procédé passe ensuite à l'étape S5 de gestion de déplacement du curseur.

L'étape S44, c'est-à-dire lorsque la vitesse $V_J$ de déplacement du joystick/stick est inférieure au seuil de vitesse $V_{REF}$ prédéterminé, consiste à transmettre des données de position pondérée par une fonction d'amortissement décrite plus en détail avec la figure 10. Le procédé passe ensuite à l'étape S5 de gestion de déplacement du curseur.

La figure 10 représente l'étape S44 mettant en œuvre une fonction d'amortissement lors de l'activation de la zone morte dynamique décalée.

La fonction d'amortissement prédéterminée est réglable en fonction des variables déclarées et de paramètres liés au profil de l'utilisateur. En particulier, lors d'une étape préliminaire S440 optionnelle, généralement remplie avant que l'utilisateur ne commence à jouer, l'utilisateur peut entrer des temps de latence $t_1$ et $t_2$ qui sont ensuite utilisés pour définir la fonction d'amortissement, ou alternativement un seul temps de latence $(t_2)$ réglable entre des valeurs allant de 8 millisecondes (ms) à 1200 ms.

Les temps de latence $t_1$ et $t_2$ sont définis de la manière suivante :

$$50\% \ t_2 < t_1 < 80\% \ t_2.$$

De préférence le premier temps de latence $t_1$ est choisi pour correspondre à 2/3 du temps de latence $t_2$.

Le choix du temps de latence par l'utilisateur sera guidé par son niveau de maitrise du jeu, le type de jeu et le comportement attendu dans le jeu. Ce temps de latence permet de définir le délai de réactivation de la zone morte qui est important pour adoucir la transition entre zone morte inactive et zone morte active.

Alternativement, des valeurs par défaut pourront être appliquées pour définir les temps de latence.

L'étape S44 d'application d'une fonction d'amortissement pour la transmission de données, consiste dans une étape S441 à mesurer si le temps écoulé est inférieur au premier de temps de latence $t_1$ prédéfini, lorsque la vitesse $V_J$ de déplacement du joystick/stick est inférieure au seuil de vitesse $V_{REF}$ prédéterminé à l'intérieur de la zone morte dynamique décalée. Si le temps écoulé est inférieur au premier temps de latence, le procédé continue à l'étape S442. Si le temps écoulé est supérieur au premier temps de latence, le procédé continue à l'étape S443.

L'étape S442, c'est-à-dire lorsque le temps écoulé est inférieur au premier temps de latence $t_1$, consiste à transmettre des données de position pondérées avec un coefficient de sensibilité constant K, choisi entre 0.1 et 1, et de préférence entre 0.8 et 1, afin de garder une certaine inertie dans le traitement d'un ralentissement dans le déplacement du joystick/stick.

Après cette transmission, le procédé retourne à l'étape S41, sans réinitialisation du compteur de temps écoulé, consistant à vérifier que la position actuelle du joystick/stick est toujours à l'intérieur de la zone morte dynamique décalée et que la vitesse actuelle de déplacement du joystick/stick est toujours inférieure au seuil de vitesse $V_{REF}$ prédéterminé. Si les deux conditions sont remplies, le procédé retourne à l'étape S44. Sinon, le procédé réinitialise le compteur de temps écoulé.

L'étape S443, c'est-à-dire lorsque le temps écoulé est supérieur au premier temps de latence $t_1$, consiste à mesurer si le temps écoulé est inférieur au deuxième temps de latence $t_2$ prédéfini, depuis la détection d'un ralentissement de la vitesse de déplacement sous le seuil de vitesse prédéterminé à l'intérieur de la zone morte dynamique décalée.

Si le temps écoulé est inférieur au deuxième temps de latence, le procédé continue à l'étape S444. Si le temps écoulé est supérieur au deuxième temps de latence, le procédé continue à l'étape S445.

L'étape S444, c'est-à-dire lorsque le temps écoulé est supérieur au premier temps de latence $t_1$ tout en étant inférieur au deuxième temps de latence $t_2$, consiste à transmettre des données de position pondérées au moyen d'une fonction d'amortissement k(t) décroissante de préférence depuis la donnée de position pondérée $((X(t_1), Y(t_1)).K)$ avec le coefficient de sensibilité constant K au temps $t_1$ jusqu'à la valeur 0 au temps $t_2$ de sorte à amortir le mouvement du joystick/stick dans la zone morte dynamique décalée jusqu'à retrouver la situation classique dans laquelle les petits mouvements à l'intérieur d'une zone morte ne sont pas transmis.

Le coefficient de sensibilité ou fonction d'amortissement k(t) est par exemple défini par une fonction polynomiale de degré 3 du type :

$$k(t) = a.t^3 + b.t^2 + c.t + d \qquad\qquad (1)$$

dans laquelle t représente le temps écoulé, a, b, c et d représentent des coefficients définis en fonction d'au moins un paramètre renseigné par l'utilisateur ou prédéfini (par ex. le temps de latence total).

Après cette transmission, le procédé retourne à l'étape S41, sans réinitialisation du compteur de temps écoulé, consistant à vérifier que la position actuelle du joystick/stick est toujours à l'intérieur de la zone morte dynamique décalée et que la vitesse actuelle de déplacement du joystick/stick est toujours inférieure au seuil de vitesse $V_{REF}$ prédéterminé. Si les deux conditions sont remplies, le procédé retourne à l'étape S44. Sinon, le procédé réinitialise le compteur de temps écoulé.

L'étape S445, c'est-à-dire lorsque le temps écoulé est supérieur au deuxième temps de latence $t_2$, consiste à activer (complètement) la zone morte dynamique décalée de sorte que tous les petits mouvements à l'intérieur de cette zone sont ignorés. On entend ici par petits mouvements, les déplacements du joystick/stick dont la vitesse est inférieure au seuil de vitesse de référence. L'activation de cette zone morte dynamique décalée s'avère très utile pour stabiliser le curseur de visée sur une cible à l'écran et ce dans une position décalée du joystick/stick par rapport à la zone morte statique.

La figure 11 représente une variante de réalisation du procédé incluant une configuration de la zone morte statique, conformément à l'étape S13, se basant essentiellement sur la position du joystick/stick au repos.

La configuration de la zone morte statique (ZMS) consiste à définir la zone dans laquelle les petits mouvements du joystick/stick ne sont, en général, pas pris en compte par le jeu vidéo pour éviter des déplacements intempestifs du curseur de visée sur l'écran. Cette configuration de la zone morte statique peut être effectuée préalablement à l'utilisation du joystick/stick pour jouer et éventuellement être mise à jour de temps à autre en raison des possibles dérives de la position de repos du joystick/stick suite aux nombreuses sollicitations dont il est l'objet.

Une première étape préliminaire S131 consiste à mesurer l'inclinaison maximale $I_{MAX}$ du joystick ou le déplacement maximal du stick. Cette mesure peut être faite par exemple en déplaçant le joystick/stick en butée selon les différents axes de déplacement et à mesurer l'inclinaison maximale/le déplacement maximal par rapport à la position de repos, ou encore par l'intermédiaire d'une saisie par l'utilisateur de l'inclinaison maximale/du déplacement maximal. L'inclinaison maximale est de préférence définie en degrés.

L'étape S132 consiste à régler la zone morte, lorsque l'inclinaison maximale ou le déplacement maximal est connu. De préférence, la zone morte est définie comme la zone autour de la position de repos correspondant à un pourcentage déterminé de l'inclinaison maximale ou du déplacement maximal, comprise par exemple entre 0 et 10%, de préférence entre 0 et 5%, et encore plus préférentiellement 2%.

L'étape S133 consiste à détecter la position de repos du joystick/stick. Cette position de repos $(X_0, Y_0)$ est utilisée pour déterminer la zone morte autour, notamment lors de l'étape S132.

Lors de l'utilisation du joystick/stick, il peut arriver avec le temps que la position de repos se décale par rapport à la zone morte déterminée. L'étape S134 consiste à centrer ou recentrer la zone morte par rapport à la position de repos. Ce centrage de la zone morte est effectué en décalant le point de repos perçu comme position centrale du joystick/stick. L'objectif est de «symétriser» le défaut de recentrage du joystick/stick et par conséquent de pouvoir utiliser une zone morte moins grande. Par exemple, supposons que le joystick/stick se recentre avec un décalage de -2% à +10% selon l'axe horizontal et de -4% à 14% selon l'axe vertical. Une zone morte de 14% au moins est alors nécessaire afin d'éviter tout mouvement indésirable. En décalant de -4% selon l'axe horizontal et de -5% selon l'axe vertical, le joystick/stick se recentre avec un décalage de -6% à +6% selon l'axe horizontal et de -9% à 9% selon l'axe vertical il ne faut plus maintenant que 9% de zone morte.

Une étape supplémentaire S135 est de préférence prévue après l'étape de centrage S134. En effet, le centrage de la zone morte autour du point de repos peut entraîner une asymétrie de la visée de sorte que la vitesse maximale n'est plus la même selon la direction de déplacement du joystick/stick. L'étape S135 consiste à calculer automatiquement la nouvelle vitesse maximale selon chaque direction et effectuer une mise à l'échelle (en faisant varier la sensibilité) dans toutes les directions afin de restaurer la vitesse maximale d'origine et de réobtenir une visée symétrique. Pour cela, l'utilisateur doit entrer les décalages maximaux et minimaux selon l'axe horizontal et vertical et la nouvelle position centrale peut être automatiquement calculée.

Il peut être également prévu une étape supplémentaire S136 consistant à détecter si la position du joystick/stick est toujours située dans la zone morte. Lorsque la position du joystick/stick détectée est en dehors de la zone morte, le procédé passe à l'étape S137.

L'étape S137 consiste à lisser la nouvelle position détectée du joystick/stick par rapport à un historique des positions précédentes ce qui permet de gommer un saut de position lié à la sortie de la zone morte statique.

Selon une variante de configuration de la zone morte statique, elle peut être effectuée à travers un réglage par l'utilisateur consistant à entrer une valeur de rayon permettant de définir par projection un disque de zone morte sur le plan du mouvement usuellement sphérique du joystick ou plan de déplacement du stick. La zone morte peut être réglée entre 0 et 90% de la course du joystick/stick correspondant à son déplacement entre sa position de repos et sa position en butée. De préférence la zone morte est définie à 2% de la course du joystick/stick.

Une configuration similaire peut être réalisée pour la zone morte dynamique décalée, en particulier via un réglage par l'utilisateur consistant à entrer une valeur de rayon permettant de définir par projection un disque de zone morte sur le plan du mouvement usuellement sphérique du joystick ou plan du stick.

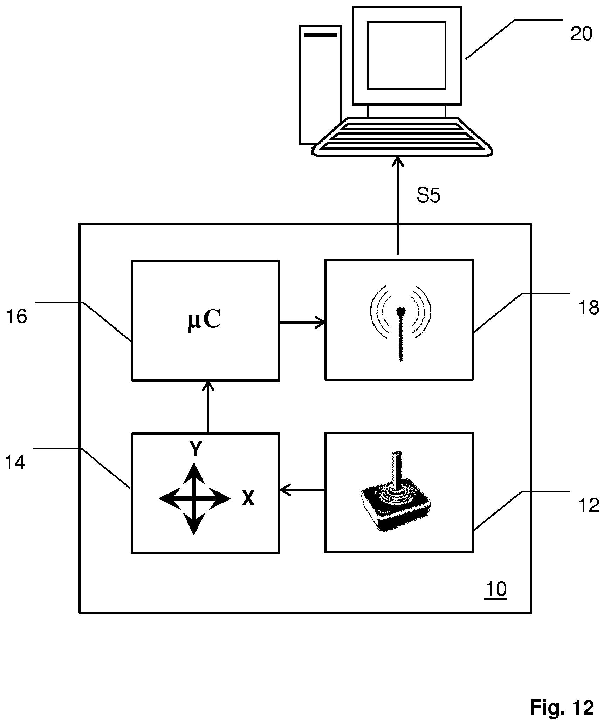

Selon un sixième aspect, l'invention concerne un dispositif d'actionnement de jeu. La figure 12 représente schématiquement un joystick 10 selon un mode de réalisation de l'invention. Cela s'applique de la même manière à une manette de jeu munie d'un stick.

Le joystick comprend un levier 12 agencé pour occuper une position de repos et se déplacer selon deux axes X-Y et présentant une zone morte définie autour de la position de repos. Un capteur de position 14 est agencé pour détecter la position du levier 12 suivant les deux axes X-Y. Des moyens de traitement, comme par exemple un microcontrôleur 16, sont agencés pour déterminer la vitesse de déplacement du levier basée sur les positions successives détectées et pour comparer la vitesse de déplacement avec un seuil de vitesse prédéterminé. Des moyens de communication 18 sont agencés pour transmettre des données de position et de vitesse à une unité de traitement externe, comme par exemple un ordinateur personnel 20.

Plus particulièrement, les moyens de traitement (16) et les moyens de communication (18) sont agencés pour la mise en œuvre du procédé de contrôle d'un curseur de visée selon l'un ou plusieurs des premier à cinquième aspects de l'invention.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de contrôle d'une position et/ou d'un déplacement d'un curseur de visée sur un écran au moyen d'un dispositif d'actionnement de jeu équipé d'au moins un élément de commande de direction définissant un levier de joystick ou un stick directionnel ayant une amplitude de mouvement limitée et une extrémité libre, le curseur ayant une vitesse de déplacement ($V_C$) à l'écran, **caractérisé en ce que** le procédé comprend les étapes suivantes :

   - détecter périodiquement une position ($X_J$, $Y_J$) du projeté de l'extrémité libre sur un plan de déplacement ;
   - calculer une vitesse de déplacement ($V_j$) par une dérivée d'ordre un par rapport au temps de ladite position en fonction d'un historique desdites positions détectées périodiquement;
   - comparer la vitesse de déplacement ($V_j$) avec une valeur de référence ($V_{REF}$) ;
   - lorsque la vitesse de déplacement ($V_j$) est inférieure à la valeur de référence, amortir la vitesse de déplacement du curseur ($V_C$) à l'écran en fonction de la vitesse de déplacement ($V_j$) ; et

   dans lequel la vitesse de déplacement est définie par des composantes radiale et angulaire dans le plan de déplacement et dans lequel l'amortissement de la vitesse de déplacement du curseur ($V_C$) est fonction de la vitesse radiale.

2. Procédé de contrôle selon la revendication 1, dans lequel l'étape d'amortissement de la vitesse de déplacement du curseur consiste à :

   - lorsque la vitesse radiale est positive, appliquer une première fonction d'amortissement de la vitesse de déplacement du curseur ($V_C$) ; et
   - lorsque la vitesse radiale est négative, appliquer une deuxième fonction d'amortissement de la vitesse de déplacement du curseur ($V_C$) avec un amortissement plus rapide que la première fonction d'amortissement.

**3.** Procédé de contrôle selon la revendication 2, dans lequel la première fonction d'amortissement de la vitesse de déplacement du curseur (Vc) consiste à pondérer la valeur absolue de la vitesse radiale avec un premier coefficient d'amortissement ($Am_1$), et la deuxième fonction d'amortissement de la vitesse de déplacement du curseur ($V_C$) consiste à pondérer la valeur absolue de la vitesse radiale avec un deuxième coefficient d'amortissement ($Am_2$) inférieur au premier coefficient d'amortissement.

**4.** Procédé de contrôle selon la revendication 3, dans lequel le premier coefficient d'amortissement est une valeur réglable entre 0.3 et 0.9, de préférence choisie à 0.4, et le deuxième coefficient d'amortissement est une valeur réglable entre 0 et 0.3, de préférence choisie à 0.1.

**5.** Procédé de contrôle selon la revendication 4, dans lequel la première fonction d'amortissement de la vitesse de déplacement du curseur ($V_C$) consiste à pondérer la valeur absolue de la vitesse radiale avec un premier coefficient d'amortissement positif ($Am_{pos}$), et la deuxième fonction d'amortissement de la vitesse de déplacement du curseur ($V_C$) consiste à pondérer la valeur absolue de la vitesse radiale avec un deuxième coefficient d'amortissement négatif ($Am_{neg}$).

**6.** Procédé de contrôle selon l'une des revendications 1 à 5, comprenant une étape consistant à :

- lorsque la composante angulaire ($V_\theta$) de la vitesse calculée est supérieure à un seuil de vitesse angulaire prédéterminé, faire pivoter la visée à l'écran dans le même sens que la composante angulaire.

**7.** Procédé de contrôle selon l'une quelconque des revendications 1 à 6, comprenant en outre une étape consistant à :

- définir au moins une zone active dans le plan de déplacement, dans laquelle la vitesse de déplacement du curseur ($V_C$) est fonction de la position détectée et de la vitesse de déplacement ($V_j$).

**8.** Procédé de contrôle selon la revendication 1, dans lequel une position du projeté de l'extrémité libre est une position de repos ($X_0$, $Y_0$) dans le plan de déplacement, et comprenant des étapes consistant à :

- définir une première zone active dans le plan de déplacement autour de la position de repos, dans laquelle la vitesse de déplacement ($V_C$) du curseur est fonction

  o de la position détectée lorsque la vitesse de déplacement ($V_j$) est supérieure à la valeur de référence ($V_{REF}$) ;
  o de la position détectée et amortie en fonction de la vitesse de déplacement lorsque la vitesse de déplacement ($V_j$) est inférieure à la valeur de référence; et

- définir au moins une deuxième zone active dans le plan de déplacement autour de la première zone active, dans laquelle la vitesse de déplacement du curseur ($V_c$) est fonction de la position détectée et de la vitesse de déplacement ($V_j$); et est amortie en fonction de la vitesse de déplacement ($V_j$) lorsque la vitesse de déplacement ($V_j$) est inférieure à la valeur de référence.

**9.** Procédé de contrôle selon la revendication 8, comprenant en outre les étapes consistant à :

- définir une troisième zone active dans le plan de déplacement autour de la deuxième zone active, dans laquelle la vitesse de déplacement du curseur ($V_C$) est fonction de la position détectée et de la vitesse de déplacement ($V_j$); et est amortie en fonction de la vitesse de déplacement ($V_j$) lorsque la vitesse de déplacement ($V_j$) est inférieure à la valeur de référence ($V_{REF}$) ;
- lorsque la vitesse de déplacement ($V_j$) est supérieure à la valeur de référence ($V_{REF}$) , répartir les vitesses de déplacement du curseur entre :

  o des vitesses de marche ou d'ajustement de visée comprises entre une vitesse nulle et une première vitesse intermédiaire lorsque la position détectée est située dans la première zone active ;
  o des vitesses de course ou de poursuite de cible comprises entre la première vitesse intermédiaire et une deuxième vitesse intermédiaire supérieure à la première vitesse intermédiaire lorsque la position détectée est située dans la deuxième zone active ;
  o des vitesses de sprint comprises entre la deuxième vitesse intermédiaire et une vitesse maximale lorsque la position détectée est située dans la troisième zone active.

**10.** Procédé de contrôle selon la revendication 9, dans lequel lesdites zones actives sont réglables.

**11.** Procédé de contrôle selon la revendication 9, dans lequel la course de l'élément de commande de direction est limitée par une zone de butée située en périphérie de la troisième zone active, la première zone active s'étendant de la position de repos à une position correspondant à 65% de la distance de course, la deuxième zone active s'étendant entre 65% et 90% de la distance de course et la troisième zone active s'étendant entre 90% de la distance de course et la zone de butée périphérique.

**12.** Procédé de contrôle selon l'une des revendications 8 à 11, dans lequel une zone morte statique (ZMS) est définie autour de la position de repos $(X_0, Y_0)$ et dans laquelle les déplacements de l'élément de commande de direction ne sont pas pris en considération, la première zone active s'étendant autour de la zone morte statique.

**13.** Procédé de contrôle selon la revendication 1, dans lequel une position de l'extrémité libre est une position de repos et le plan de déplacement présente une zone morte statique définie par un déplacement prédéterminé autour de la position de repos, comprenant en outre les étapes consistant à :

- lorsque la position détectée est située en dehors de la zone morte statique, définir une zone morte dynamique décalée (ZMDD) autour de la position détectée dite position de maintien ;
- activer la zone morte dynamique décalée en fonction de ladite au moins une dérivée calculée.

**14.** Dispositif d'actionnement de jeu comprenant des moyens de traitement agencés pour la mise en oeuvre du procédé de contrôle selon l'une des revendications 1 à 13, ledit dispositif comprenant au moins ledit élément de commande de direction ayant une amplitude de mouvement limitée et une extrémité libre ; un capteur de position agencé pour détecter une position de l'élément de commande de direction; des moyens de communication avec une unité de traitement numérique agencés pour transmettre des données de contrôle de la position et/ou le déplacement du curseur.

**Patentansprüche**

**1.** Verfahren zur Steuerung einer Position und/oder einer Bewegung eines Zielcursors auf einem Bildschirm mittels einer Spielbetätigungsvorrichtung, die mit mindestens einem Richtungssteuerelement ausgestattet ist, das einen Joystickhebel oder einen Richtungsstick mit einer begrenzten Bewegungsamplitude und einem freien Ende definiert, wobei der Cursor eine Bewegungsgeschwindigkeit $(V_c)$ auf dem Bildschirm aufweist, **dadurch gekennzeichnet, dass** das Verfahren die folgenden Schritte umfasst:

- periodisches Erfassen einer Position $(X_J, Y_J)$ der Projektion des freien Endes auf eine Bewegungsebene;
- Berechnen einer Bewegungsgeschwindigkeit $(V_j)$ durch eine Ableitung erster Ordnung nach der Zeit der Position in Abhängigkeit von einem Verlauf der periodisch erfassten Positionen;
- Vergleichen der Bewegungsgeschwindigkeit $(V_j)$ mit einem Referenzwert $(V_{REF})$ ;
- wenn die Bewegungsgeschwindigkeit $(V_j)$ unter dem Referenzwert liegt, Dämpfen der Bewegungsgeschwindigkeit des Cursors $(V_c)$ auf dem Bildschirm in Abhängigkeit von der Bewegungsgeschwindigkeit $(V_j)$; und

wobei die Bewegungsgeschwindigkeit durch eine radiale und eine Winkelkomponente in der Bewegungsebene definiert ist und wobei die Dämpfung der Bewegungsgeschwindigkeit des Cursors $(V_c)$ eine Funktion der Radialgeschwindigkeit ist.

**2.** Verfahren zur Steuerung nach Anspruch 1, wobei der Schritt des Dämpfens der Bewegungsgeschwindigkeit des Cursors aus Folgendem besteht:

- wenn die Radialgeschwindigkeit positiv ist, Anwenden einer ersten Dämpfungsfunktion für die Bewegungsgeschwindigkeit des Cursors $(V_c)$; und
- wenn die Radialgeschwindigkeit negativ ist, Anwenden einer zweiten Dämpfungsfunktion für die Bewegungsgeschwindigkeit des Cursors $(V_c)$ mit einer schnelleren Dämpfung als die erste Dämpfungsfunktion.

**3.** Verfahren zur Steuerung nach Anspruch 2, wobei die erste Dämpfungsfunktion der Bewegungsgeschwindigkeit des Cursors $(V_c)$ darin besteht, den Absolutwert der Radialgeschwindigkeit mit einem ersten Dämpfungskoeffizienten $(Am_1)$ zu gewichten, und die zweite Dämpfungsfunktion der Bewegungsgeschwindigkeit des Cursors $(V_c)$ darin besteht, den Absolutwert der Radialgeschwindigkeit mit einem zweiten Dämpfungskoeffizienten ($Am_2$) zu gewichten, der kleiner als der erste Dämpfungskoeffizient ist.

4. Verfahren zur Steuerung nach Anspruch 3, wobei der erste Dämpfungskoeffizient ein zwischen 0,3 und 0,9 einstellbarer Wert ist, der vorzugsweise auf 0,4 gewählt wird, und der zweite Dämpfungskoeffizient ein zwischen 0 und 0,3 einstellbarer Wert ist, der vorzugsweise auf 0,1 gewählt wird.

5. Verfahren zur Steuerung nach Anspruch 4, wobei die erste Dämpfungsfunktion der Bewegungsgeschwindigkeit des Cursors ($V_c$) darin besteht, den Absolutwert der Radialgeschwindigkeit mit einem ersten positiven Dämpfungskoeffizienten ($Am_{pos}$) zu gewichten, und die zweite Dämpfungsfunktion der Bewegungsgeschwindigkeit des Cursors ($V_c$) darin besteht, den Absolutwert der Radialgeschwindigkeit mit einem zweiten negativen Dämpfungskoeffizienten ($Am_{neg}$) zu gewichten.

6. Verfahren zur Steuerung nach einem der Ansprüche 1 bis 5, umfassend einen Schritt, der aus Folgendem besteht:

   - wenn die Winkelkomponente ($V_\theta$) der berechneten Geschwindigkeit größer als ein vorbestimmter Winkelgeschwindigkeitsschwellenwert ist, Drehen der Zielpunkt auf dem Bildschirm in die gleiche Richtung wie die Winkelkomponente.

7. Verfahren zur Steuerung nach einem der Ansprüche 1 bis 6, ferner umfassend einen Schritt, der aus Folgendem besteht:

   - Definieren mindestens eines aktiven Bereichs in der Bewegungsebene, in dem die Bewegungsgeschwindigkeit des Cursors ($V_C$) eine Funktion der erfassten Position und der Bewegungsgeschwindigkeit ($V_j$) ist.

8. Verfahren zur Steuerung nach Anspruch 1,
   wobei eine Position der Projektion des freien Endes eine Ruheposition ($X_0$, $Y_0$) in der Bewegungsebene ist, und umfassend Schritte, die aus Folgendem bestehen:

   - Definieren eines ersten aktiven Bereichs in der Bewegungsebene um die Ruheposition herum, in dem die Bewegungsgeschwindigkeit des Cursors ($V_c$) des Cursors eine Funktion

     o der erfassten Position ist, wenn die Bewegungsgeschwindigkeit ($V_j$) größer als der Referenzwert ($V_{REF}$) ist;
     o der erfassten und in Abhängigkeit von der Bewegungsgeschwindigkeit gedämpften Position ist, wenn die Bewegungsgeschwindigkeit ($V_j$) kleiner als der Referenzwert ist; und

   - Definieren mindestens eines zweiten aktiven Bereichs in der Bewegungsebene um den ersten aktiven Bereich herum, in dem die Bewegungsgeschwindigkeit des Cursors ($V_c$) eine Funktion der erfassten Position und der Bewegungsgeschwindigkeit ($V_j$) ist; und in Abhängigkeit von der Bewegungsgeschwindigkeit ($V_j$) gedämpft wird, wenn die Bewegungsgeschwindigkeit ($V_j$) kleiner als der Referenzwert ist.

9. Verfahren zur Steuerung nach Anspruch 8, ferner umfassend die Schritte, die aus Folgendem bestehen:

   - Definieren mindestens eines dritten aktiven Bereichs in der Bewegungsebene um den zweiten aktiven Bereich herum, in dem die Bewegungsgeschwindigkeit des Cursors ($V_c$) eine Funktion der erfassten Position und der Bewegungsgeschwindigkeit ($V_j$) ist; und in Abhängigkeit von der Bewegungsgeschwindigkeit ($V_j$) gedämpft wird, wenn die Bewegungsgeschwindigkeit ($V_j$) kleiner als der Referenzwert ($V_{REF}$) ist;
   - wenn die Bewegungsgeschwindigkeit ($V_j$) größer als der Referenzwert ($V_{REF}$) ist, Aufteilen der Bewegungsgeschwindigkeiten des Cursors zwischen:

     o Geh- oder Zieleinstellungsgeschwindigkeiten, die zwischen einer Nullgeschwindigkeit und einer ersten Zwischengeschwindigkeit liegen, wenn sich die erfasste Position in dem ersten aktiven Bereich befindet;
     o Lauf- oder Zielverfolgungsgeschwindigkeiten, die zwischen der ersten Zwischengeschwindigkeit und einer zweiten Zwischengeschwindigkeit liegen, die größer als die erste Zwischengeschwindigkeit ist, wenn sich die erfasste Position in dem zweiten aktiven Bereich befindet;
     o Sprintgeschwindigkeiten, die zwischen der zweiten Zwischengeschwindigkeit und einer Höchstgeschwindigkeit liegen, wenn sich die erfasste Position in dem dritten aktiven Bereich befindet.

10. Verfahren zur Steuerung nach Anspruch 9, wobei die aktiven Bereiche einstellbar sind.

11. Verfahren zur Steuerung nach Anspruch 9, wobei der Hub des Richtungssteuerelements durch eine Anschlagzone begrenzt wird, die sich am Umfang des dritten aktiven Bereichs befindet, wobei sich der erste aktive Bereich von der Ruheposition bis zu einer Position erstreckt, die 65% der Hubdistanz entspricht, der zweite aktive Bereich sich zwischen 65% und 90% der Hubdistanz erstreckt und der dritte aktive Bereich sich zwischen 90% der Hubdistanz und der Umfangsanschlagzone erstreckt.

12. Verfahren zur Steuerung nach einem der Ansprüche 8 bis 11, wobei eine statische Totzone (ZMS) um die Ruheposition $(X_0, Y_0)$ herum definiert ist und in der die Bewegungen des Richtungssteuerelements nicht berücksichtigt werden, wobei sich die der erste aktive Bereich um die statische Totzone herum erstreckt.

13. Verfahren zur Steuerung nach Anspruch 1, wobei eine Position des freien Endes eine Ruheposition ist und die Bewegungsebene eine statische Totzone aufweist, die durch eine vorbestimmte Bewegung um die Ruheposition herum definiert ist, ferner umfassend die Schritte, die aus Folgendem bestehen:

- wenn die erfasste Position außerhalb der statischen Totzone liegt, Definieren einer versetzten dynamischen Totzone (ZMDD) um die erfasste Position, die sogenannte Halteposition;
- Aktivieren der versetzten dynamischen Totzone in Abhängigkeit von der mindestens einen berechneten Ableitung.

14. Spielbetätigungsvorrichtung mit Verarbeitungsmitteln, die zur Durchführung des Verfahrens zur Steuerung nach einem der Ansprüche 1 bis 13 angeordnet sind, wobei die Vorrichtung mindestens das Richtungssteuerelement mit einer begrenzten Bewegungsamplitude und einem freien Ende; einen Positionssensor, der zur Erfassung einer Position des Richtungssteuerelements angeordnet ist; Mittel zur Kommunikation mit einer digitalen Verarbeitungseinheit, die zur Übertragung von Daten zur Steuerung der Position und/oder der Bewegung des Cursors angeordnet sind, umfasst.

**Claims**

1. A method for controlling a position and/or a movement of an aiming cursor on a screen by means of a game controller equipped with at least one direction control element defining a joystick lever or a directional stick having a limited movement amplitude and a free end, the cursor having a movement speed ($V_c$) on the screen, **characterized in that** the method comprises the following steps:

- periodically detecting a position ($X_J$, $Y_J$) of the projection of the free end onto a movement plane;
- calculating a movement speed ($V_j$) using a time derivative of order one of said position as a function of the history of said periodically detected positions;
- comparing the movement speed ($V_j$) to a reference value ($V_{REF}$) ;
- when the movement speed ($V_j$) is less than the reference value, damping the displacement speed of the cursor ($V_c$) on the screen as a function of the movement speed ($V_j$); and

wherein the movement speed is defined by radial and angular components in the movement plane and wherein the damping of the movement speed of the cursor ($V_c$) is a function of the radial speed.

2. The control method according to claim 1, wherein the step of buffering the movement speed of the cursor consists of:

- when the radial speed is positive, applying a first function for damping the displacement speed of the cursor ($V_c$); and
- when the radial speed is negative, applying a second function damping the displacement speed of the cursor ($V_c$) with faster damping that the first damping function.

3. The control method according to claim 2, wherein the first function of damping the movement speed of the cursor ($V_c$) consists of weighting the absolute value of the radial speed with a first damping coefficient ($Am_1$), and the second damping function of the movement speed of the cursor ($V_c$) consists of weighting the absolute value of the radial speed with a second damping coefficient ($Am_2$) less than the first damping coefficient.

4. The control method according to claim 3, wherein the first damping coefficient is a value adjustable between 0.3 and 0.9, preferably selected to be 0.4, and the second damping coefficient is a value adjustable between 0 and 0.3, preferably selected to be 0.1.

5. The control method according to claim 4, wherein the first damping function of the movement speed of the cursor ($V_c$) consists of weighting the absolute value of the radial speed with a first, positive damping coefficient ($Am_{pos}$), and the second damping function of the movement speed of the cursor (Vc) consists of weighting the absolute value of the radial speed with a second, negative damping coefficient ($Am_{neg}$).

6. The control method according to one of claims 1 to 5, comprising a step consisting of:

- when the angular component ($V_\theta$) of the calculated speed is greater than a predetermined angular speed threshold, pivoting the aiming point on the screen in the same direction as the angular component.

7. The control method according to any one of claims 1 to 6, further comprising a step consisting of:

- defining at least one active zone in the movement plane, wherein the movement speed of the cursor ($V_c$) is a function of the detected position and of the movement speed ($V_j$) .

8. The control method according to claim 1, wherein a position of the projection of the free end is a rest position ($X_0$, $Y_0$) in the movement plane, and comprising the steps consisting of:

- defining a first active zone in the movement plane around the rest position, wherein the movement speed ($V_c$) of the cursor is a function

o of the detected position de la position when the movement speed ($V_j$) is greater than the reference value ($V_{REF}$) ;
o of the detected position and damped as a function of the movement speed when the movement speed ($V_j$) is less than the reference value; and

- defining at least one second active zone in the movement plane around the first active zone, wherein the movement speed of the cursor ($V_c$) is a function of the detected position and of the movement speed ($V_j$); and is damped as a function of the movement speed ($V_j$) when the movement speed ($V_j$) is less than the reference value.

9. The control method according to claim 8, further comprising the steps consisting of:

- defining a third active zone in the movement plane around the second active zone, wherein the movement speed of the cursor ($V_c$) is a function of the detected position and of the movement speed ($V_j$); and is damped as a function of the movement speed ($V_j$) when the movement speed ($V_j$) is less than the reference value ($V_{REF}$) ;
- when the movement speed ($V_j$) is greater than the reference value ($V_{REF}$), distributing the movement speeds of the cursor between:

o operating or aiming point adjustment speeds comprised between a zero speed and a first intermediate speed, when the detected position is located in the first active zone;
o target chasing or pursuit speeds comprised between the first intermediate speed and a second intermediate speed greater than the first intermediate speed, when the detected position is located in the second active zone;
o sprint speeds comprised between the second intermediate speed and a maximum speed when the detected position is located in the third active zone.

10. The control method according to claim 9, wherein said active zones are adjustable.

11. The control method according to claim 9, wherein the travel of the direction control element is limited by an abutment zone located at the periphery of the third active zone, the first active zone extending from the rest position to a position corresponding to 65% of the travel distance, the second active zone extending between 65% and 90% of the travel distance and the third active zone extending between 90% of the travel distance and the peripheral abutment zone.

**12.** The control method according to one of claims 8 to 11, wherein a static dead zone (ZMS) is defined around the rest position ($X_0$, $Y_0$) and in which the movements of the direction control element are not taken into consideration, the first active zone extending around the static dead zone.

**13.** The control method according to claim 1, wherein a position of the free end is a rest position and the movement plane has a static dead zone defined by a predetermined movement around the rest position, further comprising the steps consisting of:

- when the detected position is located outside the static dead zone, defining an offset dynamic dead zone (ZMDD) around the detected position, called the retention position;
- activating the offset dynamic dead zone as a function of said at least one calculated derivative.

**14.** A game controller comprising processing means arranged for the implementation of the control method according to one of claims 1 to 13, said controller comprising at least said direction control element having a limited movement amplitude and a free end; a position sensor arranged to detect a position of the direction control element; means of communicating with a digital processing unit arranged to transmit control data for the position and/or movement of the cursor.

```
                   ┌─────────────────────────┐
                  ╱  Gestion déplacement      ╲
                 (      curseur                )      S5a
                  ╲                           ╱
                   └───────────┬─────────────┘
                               │
                               ▼
        ┌──────────────────────┐          ┌──────────────────────┐
        │  Détection position   │          │   Calcul vitesse      │
        │     joystick          │─────────▶│     joystick          │
        │   (XJ, YJ)            │          │  (VX, VY ; VRAD, Vθ)  │
        └──────────────────────┘          └──────────┬───────────┘
           S51/S21                              S53/S23│
                                                       │      S54/S32
                                                       ▼
                                              ◇─────────────────◇
                              NON            ╱   VJ>VREF ?        ╲
              ┌──────────────────────────────    ◇─────────────────◇
              │                                            │OUI
              ▼                                            ▼
   ┌──────────────────────┐              ┌──────────────────────┐
   │   Calcul vitesse      │              │   Calcul vitesse      │
   │  curseur amortie      │              │  curseur non amortie  │
   │    f(VRAD)            │              │                       │
   └──────────┬───────────┘              └──────────┬───────────┘
      S56     │                             S55      │
              │                                      │
              └──────────────┬───────────────────────┘
                             ▼
                  ┌──────────────────────┐
                  │    Transmission       │
                  │     données           │
                  └──────────────────────┘
                          S6
```

Detection position joystick $(X_J, Y_J)$ — S51/S21

Calcul vitesse joystick $(V_X, V_Y ; V_{RAD}, V_\theta)$ — S53/S23

$V_J > V_{REF}$ ? — S54/S32

Calcul vitesse curseur amortie $f(V_{RAD})$ — S56

Calcul vitesse curseur non amortie — S55

Transmission données — S6

**Fig. 1**

Fig. 2

Z2
course

Z1
marche

Z3
sprint

ZMS

$X_0, Y_0$

butée

$X_J, Y_J$
ZMDD

**Fig. 3**

**Fig. 4**

$V_C$

$V_J < V_{REF}$

$V_{RAD} > 0$

$V_{RAD} < 0$

ZMDD

P1

P2

P3

ZMS

Z1

Z2

Z3

$Pos_J$

```
                    ┌─────────────────────┐
                    │      Contrôle       │
                    │  curseur de visée   │
                    └─────────────────────┘
                              │
                              ▼
        ┌─┬───────────────────────────┬─┐
  S1    │ │       Initialisation       │ │
        └─┴───────────────────────────┴─┘
                              │
                              ▼
        ┌─┬───────────────────────────┬─┐
  S2    │ │      Acquisition de        │ │
        │ │         données            │ │
        └─┴───────────────────────────┴─┘
                              │
                              ▼
        ┌─┬───────────────────────────┬─┐
  S3    │ │       Gestion ZMS          │ │
        └─┴───────────────────────────┴─┘
                              │
                              ▼
        ┌─┬───────────────────────────┬─┐
  S4    │ │       Gestion ZMDD         │ │
        └─┴───────────────────────────┴─┘
                              │
                              ▼
        ┌─┬───────────────────────────┬─┐
 S5a/   │ │         Gestion            │ │
 S5b    │ │       déplacement          │ │
        │ │         curseur            │ │
        └─┴───────────────────────────┴─┘
                              │
                              ▼
        ┌─┬───────────────────────────┬─┐
  S6    │ │      Traitement et         │ │
        │ │       transmission         │ │
        └─┴───────────────────────────┴─┘
```

**Fig. 5**

Initialisation    S1

S11    Déclaration des variables

Chargement paramètres profil    S12

Configuration ZMS

S13

Calcul paramètres d'entrée

S14

Calibration joystick

S15

**Fig. 6**

Acquisition données    S2

S21    Détection position joystick $(X_J, Y_J)$

S22    Transformation position joystick

S23    Déterminer vitesse joystick $(V_J)$

**Fig. 7**

**Fig. 8**

Fig. 9

S440

Régler temps de
latence ($t_1$, $t_2$)

Fonction
amortissement    S44

S441

$t < t_1$ ?    OUI

NON

S443

$t < t_2$ ?    OUI

NON

Activation
ZMDD

S445

S442

Transmettre
position pondérée
(coefficient K)

S444

Transmettre
Position pondérée
$k(t_1) = ((X(t_1),\ Y(t_1)).K)$
$\searrow k(t_2) = 0$

**Fig. 10**

Configuration ZMS — S13

S131 — Mesurer inclinaison maximale ($I_{MAX}$)

S133 — Détecter position repos ($X_0$, $Y_0$)

S132 — Régler ZMS (%$I_{MAX}$)

S134 — Centrer ZMS

S135 — Mettre à l'échelle $V_{MAX}(X, Y)$

S136 — ($X_J$, $Y_J$) ∈ ZMS ?

NON

OUI

S137 — Lisser position joystick

**Fig. 11**

Fig. 12

**EP 3 414 649 B1**

## RÉFÉRENCES CITÉES DANS LA DESCRIPTION

**Documents brevets cités dans la description**

- US 6975302 B
- WO 2015142594 A1